# EUROPEAN PATENT APPLICATION

(11) **EP 3 070 811 A1**
(43) Date of publication of application: **21.09.2016**
(21) Application number: 15305394.7
(22) Date of filing: 18.03.2015
(51) Int. Cl.: H02J 7/00, H02J 9/00

(54) **POWER SUPPLY CIRCUIT**

(71) Applicant: Thomson Licensing, 92130 Issy-les-Moulineaux (FR)
(72) Inventor: Lindemann, Robert, 30559 Hannover (DE)
(74) Representative: Huchet, Anne

(57) **Abstract**

A power supply circuit has a primary-side power input (102) and a secondary-side power output (116). A voltage converter (104) is arranged between the input (102) and the output (116). The power supply circuit further comprises a first switch (106) which, when closed, provides power from the input (102) to the voltage converter (104). The output (116) of the voltage converter (104) is connected to a receptacle (112), for providing power to a device connected thereto by a corresponding plug (114). The receptacle (112) is movable from a first position to a second position in a direction parallel to the mechanical action of plugging the plug (114) into the receptacle (112). While the receptacle (112) is moved into the second position, an electrical connection between the primary-side input (102) and the voltage converter (104) is established. The first switch (106) is subsequently held in a closed state by electric energy provided from the secondary-side power output (116).

## Description

### FIELD

The present circuit relates to the field of power supplies, in particular to power supplies consuming no power when no load is connected.

### BACKGROUND

Many battery-powered devices are charged via a USB port of a computer, or via a separate USB charger that is plugged into a wall outlet, often pejoratively referred to as 'wall warts'. When plugged into a wall outlet but not connected to a device to be charged, i.e. idling, such USB charger consumes a small amount of power.

Power consumption in idle mode may be as high as a few 100 milliwatts. While at first glance this does not appear to be a high amount of energy wasted, when there are millions of idling USB chargers the total amount of wasted energy adds up to several megawatts. While a simple solution to this problem is unplugging the USB charger from the wall outlet, this is often not done by users, and it is not possible at all with the increasing use of fixed USB charging ports that are built-in to wall outlets (see e.g. https://www.busch-jaeger.de/produkte/produktloesungen/steckdosen/schukor-usb-steckdose/), which cannot be unplugged from mains power.

US2009/0001938 shows mechanically closing the primary side AC circuit of a power adaptor as long as the plug is plugged in. However, this solution does not reduce the idle-mode power consumption when a device to be charged is connected to the power adaptor through a cable that can be disconnected at the device, and the cable remains plugged in the power adaptor.

US2010/0172164 discloses an electromechanical primary side switch, i.e., a relay, that is closed for providing power to the primary side as long as a plug is plugged in. Power to the relay is provided by resistive voltage reduction of the main voltage, which is inefficient compared to providing the power through a transformer or an AC/DC converter. Also, since a mechanical switch is provided for closing the relay that engages with a surface of the device to be charged when plugged in, a special cable is required that has two additional wires for that purpose.

US2013/0295782 suggests providing power to the primary side of an AC/DC-converter while a USB plug is plugged in, monitoring the current, and ejecting the USB plug when the current falls below a threshold. Ejecting also removes power from the primary side of the AC/DC-converter, but the ejection mechanism adds significant mechanical complexity, and an ejected cable may add mechanical stress to the device it is connected to for charging, or even cause the device to move and possibly fall.

It is desirable to simplify and improve the mechanical reliability and the operability of a power supply that does not consume any power when not loaded.

### SUMMARY

The present power supply circuit uses the mechanical action of plugging a plug into a receptacle to temporarily close a contact or a switch that provides primary-side power to a voltage converter. In response to the primary-side power connection the voltage converter produces an output voltage, which is applied as a control signal to a control terminal of a switch that closes and thereby continues providing primary-side power to the voltage converter. The output current or output power of the voltage converter is monitored. When the output current or output power provided by the voltage converter falls below a preset value the primary-side power is removed from the voltage converter. This may happen, for example, when a device is fully charged, or when a connected device is switched off.

An embodiment of a power supply circuit in accordance with the present principles has a primary-side power input and a secondary-side power output. A voltage converter is arranged between the input and the output. The power supply circuit further comprises a first switch which, when closed, provides power from the input to the voltage converter. The output of the power supply circuit is connected to a receptacle. The receptacle provides power to a device connected thereto by a corresponding plug plugged into the receptacle. The receptacle is resiliently movable from a first position to a second position in a direction parallel to the mechanical action of plugging the plug into the receptacle. When a plug is inserted the receptacle will move from the first to the second position, either during insertion or when fully inserted and upon a user pushing the plug further to make sure it is fully inserted. While the receptacle is temporarily moved into the second position during the mechanical action of plugging the plug into the receptacle, an electrical connection between the primary-side power input and the voltage converter is established. The first switch is subsequently held in a closed state by electric energy provided from the secondary-side power output. Without any force applied the receptacle moves back into the first position.

In an embodiment of the power supply in accordance with the present principles the first switch is an electromagnetic relay, which is mechanically closed when the receptacle is moved to the second position, e.g. by a push-rod that is connected to the receptacle and that acts directly on the relay contact. Once the relay is closed, the voltage converter provides power to a control input of the relay, which is thus held in the closed position. The receptacle may be fixedly connected to the push-rod in such a way that it remains in the second position while the relay is closed, and returns into the first position when the relay is opened. The receptacle may, however, also be resiliently suspended or spring-loaded in such a way that it is in contact with the push-rod only while a plug is inserted into the receptacle. Once the plug is fully inserted and the push-rod has acted on the relay contact, the resilient suspension or the spring-loading forces the receptacle back into the first position. Spring-loading may be provided by any kind of spring mechanically attached to the receptacle, for example helical springs or resilient arms formed from flexible materials. Resilient suspension may be provided by a flexible material mechanically connecting the receptacle with a support frame, for example in a manner similar to the suspension of the loudspeaker cone in the basket.

In an embodiment of the present power supply the first switch is one of an electromagnetic relay, an electronic relay and an optocoupler. A second switch is provided in parallel to the first switch. The second switch is mechanically closed while the receptacle is in the second position. Like in the previous embodiment, the second switch may be mechanically connected with the receptacle through a push-rod acting on the switch. The receptacle may be fixedly connected to the push-rod or only loosely connected to the pushrod very much like described in the previous embodiment. For example, spring-loading may be provided by the second switch itself when the receptacle, the switch and the push-rod are fixedly connected, and the switch brings the receptacle back into the first position once the plug has been fully inserted into the receptacle. Alternatively, when the receptacle, the push-rod and the switch are not fixedly connected any kind of spring loading or resilient suspension may be provided for bringing the receptacle back into the first position once the plug has been fully inserted into the receptacle. The second switch may be a non-latching mechanical switch or a magnetically operated relay. In the latter case a magnet is attached to the receptacle and is brought into the vicinity of the magnetically operated relay when the receptacle is moved from the first position into the second position.

In any of the embodiments described throughout the present specification, a power sensor or a current sensor is arranged between the output of the power supply circuit and the receptacle. A control circuit is provided that is configured to terminate the holding of the first switch in the closed state when the power or the current provided to the device falls below a threshold value. Once the first switch is no longer held in the closed state the voltage converter is no longer powered and the power consumption of the power supply circuit drops to zero.

A method for controlling the power consumption of the present power supply circuit comprises receiving a plug in the receptacle. During the receiving of the plug, the receptacle is moved from a first position into a second position. While the receptacle is in the second position an electrical connection between a primary-side input and a voltage converter of the power supply circuit is established. In response to establishing the electrical connection between the primary-side input and the voltage converter an output voltage is generated at an output of the voltage converter. The output voltage is provided to a control terminal of a first switch which, when closed, provides power from the input to the voltage converter. In response to the output voltage being provided to the control terminal of the first switch, the switch is held in the closed state. The output power or the output current is monitored. As long as the output power or the output current is higher than a threshold value the first switch is maintained in the closed state.

In some embodiments of the present power supply, in order to allow for transients to settle, and for a connected device to start drawing power from the power supply, a delay may be provided that is to expire before the control loop kicks in that switches off the power supply in response to the power consumption or the current falling below a threshold value.

In various embodiments, the voltage converter used in the present power supply circuit may be a linear voltage regulator, a transformer, a switch-mode AC/DC converter, a switch-mode DC/DC converter or a switch-mode DC/AC converter. The nature of the voltage converter is irrelevant as long as the output voltage provided is suitable for holding the first switch in the closed state. It is likewise irrelevant for the present power supply circuit if the voltage converter provides electrical isolation between the input in the output.

The various embodiments of the present power supply circuit exhibit zero power consumption when no device is connected or after the power consumption of a device has fallen below a threshold value, even when the plug remains plugged in. At the same time it combines the natural movement of plugging a plug into a receptacle with an operation to jump-start the power supply circuit and switching it on. Switching-on of the circuit can easily be repeated if necessary, by simply pushing the plug into the receptacle. The mechanical movement can be kept to a minimum, thereby relaxing the mechanical requirements and reducing mechanical stress on components.

### DESCRIPTION OF DRAWINGS

In the following section the power supply circuit will be described with reference to the attached drawings, in which
- Fig. 1: shows a simplified schematic of a first exemplary embodiment of the present power supply circuit;
- Fig. 2: shows a simplified schematic of a second exemplary embodiment of the present power supply circuit;
- Fig. 3: shows a simplified schematic of a third exemplary embodiment of the present power supply circuit; and
- Fig. 4: shows a simplified schematic of a fourth exemplary embodiment of the present power supply circuit.

In the figures identical or similar elements are referred to using the same reference numerals.

### DESCRIPTION OF EMBODIMENTS

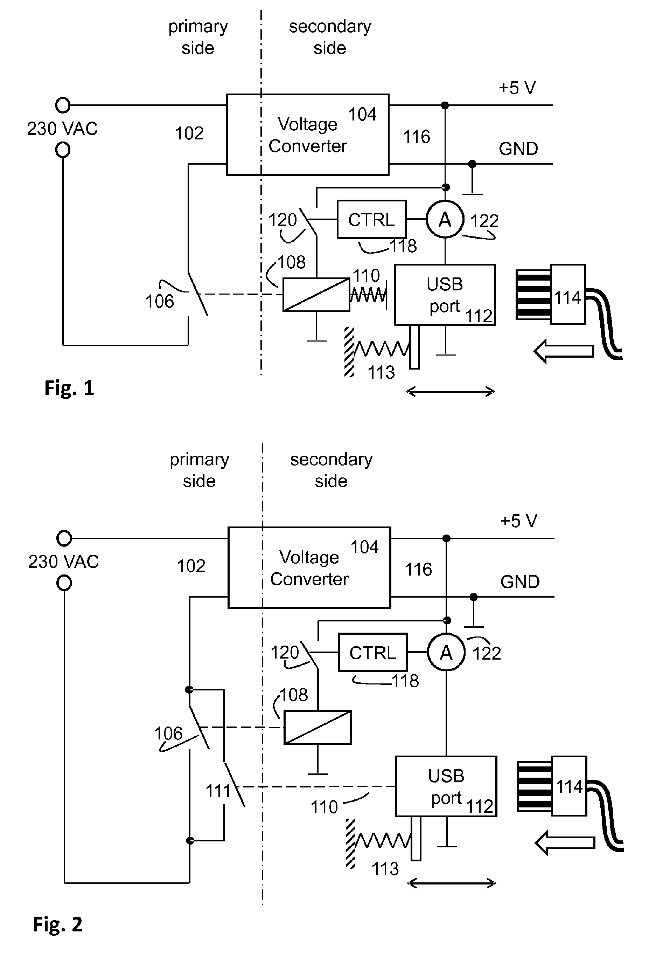

Figure 1 shows a first exemplary embodiment of the present power supply circuit. The primary-side input 102 of voltage converter 104 receives AC power (230 VAC) when contact 106 of relay 108 is closed. Relay 108 is arranged in such a way that a mechanical force applied to displaceable member 110 closes contact 106. Displaceable member 110 is, for example, a push-rod. Receptacle 112, in this exemplary embodiment represented by a USB port, receives a corresponding USB plug 114. Receptacle 112 is resiliently movable in the direction of insertion of USB plug 114. Resilient movability is provided by spring 113 attached to USB port 112. Voltage converter 104 provides an output voltage (e.g., +5 V) at secondary-side output 116. The output voltage provided at secondary-side output 116 is provided to USB port 112, for supplying power to a device attached thereto through USB plug 114, and is also provided to relay 108 by control circuit 118. In the present exemplary embodiment, control circuit 118 provides the output voltage of voltage converter 104 to relay 108 via switch 120. Control circuit 118 is connected to current meter 122, which is arranged between an output of voltage converter 104 and USB port 112, for measuring the current provided to the device attached to USB port 112.

In the following the operation of the power supply circuit of figure 1 will be described. During insertion of USB plug 114 into receptacle 112, or alternatively at the end of the insertion, receptacle 112 moves into the direction of and engages with displaceable member 110, ultimately closing contact 106. Voltage converter 104 is now connected to AC power and provides an output voltage (e.g., +5 V) to relay 108 via switch 120. To this end switch 120 is closed by control circuit 118, which control circuit is also powered by the output voltage provided by voltage converter 104 (not shown). Once USB plug 114 is inserted and power is provided to the now-attached device (not shown) the user will stop pushing and receptacle 112 will return into its initial position by the force provided by spring 113. Control circuit 118 measures the current provided to the device attached to USB port 112 (not shown) and, while the current remains above a threshold value, keeps relay 108 powered. When the current falls below the threshold value control circuit 118 removes power from relay 108, which causes contact 106 to open. Once contact 106 is opened AC power is completely removed from the primary side input 102 of the power supply circuit.

Figure 2 shows a variant of the power supply circuit shown in figure 1 in which a standard relay 108 is used for connecting the primary-side input 102 of voltage converter 104 to AC power (230 VAC). In this embodiment displaceable member 110 operates a separate switch 111 for briefly closing the primary-side AC power circuit, allowing voltage converter 104 to start up. Separate switch 111 is arranged in the primary-side AC circuit in parallel to relay contact 106. Displaceable member 110, e.g. a push rod, may be fixedly attached to movable USB port 112 in such a way that the separate switch 111 is opened when movable USB port 112 is forced back into its initial position by the force of spring 113. However, separate switch 111, displaceable member 110 and movable USB port 112 may also be engaging only when the USB port is moved from its initial position while a corresponding USB plug 114 is inserted, with separate switch 111 being of the normally open type. As soon as the primary-side AC circuit provides power to voltage converter 104 secondary-side output 116 energizes relay 108 in the manner discussed with reference to figure 1, keeping the primary-side AC power circuit closed as long as the current provided through USB port 112 is higher than a threshold value.

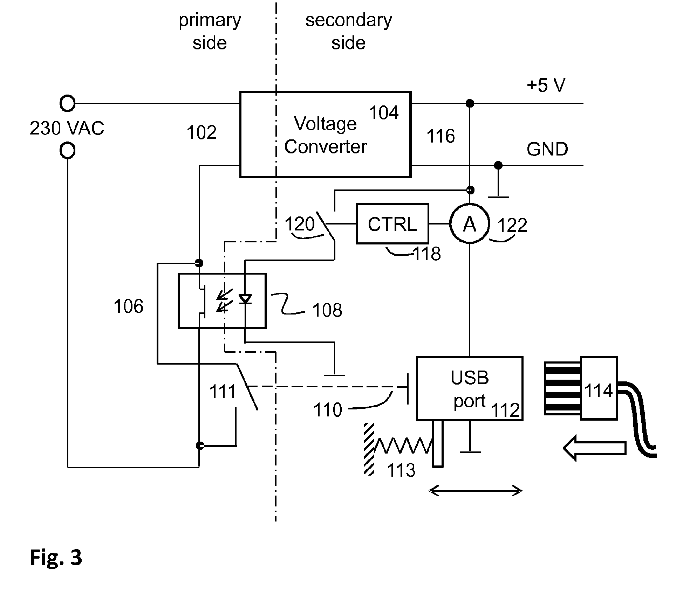

Figure 3 shows substantially the same circuit as figure 2 except for the electromagnetic relay being replaced by a solid-state relay, e.g. an optocoupler. That is, in the embodiment of Figure 3, the electromagnetic relay of the circuit of Figure 2 is replaced by a solid state relay providing for an alternate embodiment of a power supply circuit in accordance with the present principles.

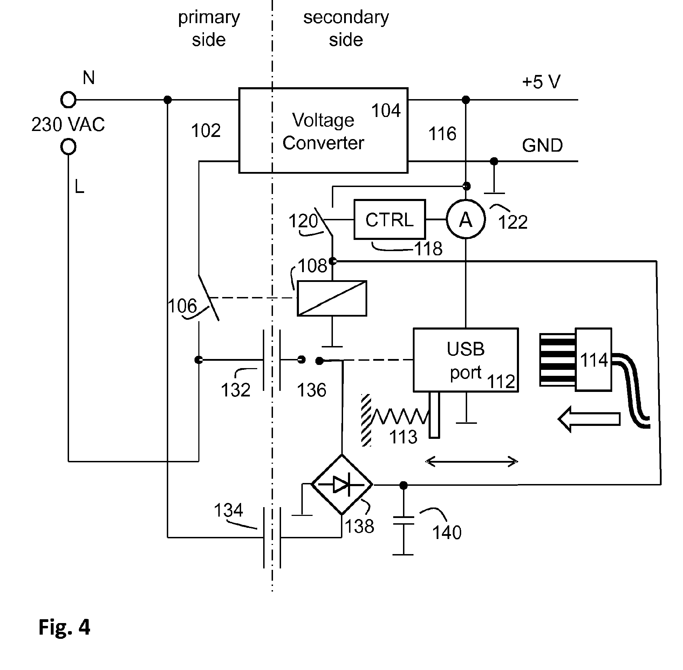

Figure 4 shows a variant of the circuit of figure 2 in which the separate switch 111 is replaced by a power supply that briefly provides power to relay 108 when plug 114 is inserted into receptacle 112. The power supply includes capacitors 132, 134, secondary-side switch 136, rectifier 138 and capacitor 140. Capacitors 132 and 134 provide isolation between the primary side and the secondary side. The capacitance values of capacitors 132 and 134 are chosen in accordance with the primary-side AC voltage and frequency so as to produce an AC voltage across rectifier 138 that suffices to energize relay 108 when secondary-side switch 136 is closed. Capacitor 140 provides smoothing and buffering of the output voltage of rectifier 138. Secondary-side switch 136 is shown in a very simplified representation, basically as two conductors that are brought into contact when receptacle 112 is moved into the second position. When proper isolation between the primary side and the secondary side is provided through capacitors 132 and 134, the voltage rating and other requirements of switch 136 may be significantly relaxed. Decoupling elements between the outputs of voltage converter 104 and rectifier 138 are omitted in the figure for clarity reasons.

The operation of the circuit of figure 4 will now be briefly discussed. When plug 114 is inserted into receptacle 112 the receptacle is moved from its first position into the second position. Receptacle 112 is mechanically connected to switch 136 and closes the switch when in the second position. When switch 136 is closed capacitors 132 and 134 provide a divided AC voltage to rectifier 138, which provides an accordingly rectified output voltage to capacitor 140 and energizes relay 108. Energized relay 108 closes switch 106, powering voltage converter 104. Voltage converter 104 provides an output voltage to receptacle 112 and to control circuit 118, which energizes relay 108 from the output voltage of voltage converter 104. Once the plugging action is terminated and the user no longer applies a force on the plug, receptacle 112 is forced back into the first position, opening switch 136. Relay 108 is now powered exclusively from the output of voltage converter 104 until the current or the power provided through receptacle 112 falls below a threshold and control circuit 118 stops energizing relay 108.

It is readily apparent to the skilled person that the various embodiments and variants discussed hereinbefore contain interchangeable elements. For example, rather than using a separate switch and a solid state relay as described in figure 3 the solid state relay may be combined with the capacitive start-up circuit of figure 4. It is likewise apparent to the skilled person that displaceable member 110 can be omitted in case a housing of receptacle 112, e.g. a USB port, is arranged in such a way that it can directly engage with separate switch 111 when a plug is inserted. The mechanical design depends on various factors, inter alia a degree of electrical isolation between the primary and the secondary side, if required. For example, if no isolation between the primary and the secondary side is required the separate switch may simply provide a control signal to voltage converter 104, which is logically OR-ed with a hold signal that is provided from the secondary side of voltage converter 104 as long as the output current remains above a threshold value. Providing a hold signal from the secondary side significantly improves the overall efficiency of the power supply circuit in those cases in which the primary side voltage is significantly higher than the secondary side voltage, and in which a low voltage signal suffices for maintaining operation of the circuit until a stopping condition is met. All such alterations and modifications should be considered within the scope of the present principles.

Although described with reference to AC-DC-converters the apparatus is not limited to AC-DC-converters, but may also be used in DC-DC-converters, AC-AC-converters, or DC-AC-converters.

## Claims

1. A power supply circuit comprising:
a primary-side power input (102);
a secondary-side power output (116);
a voltage converter (104) being arranged between the primary-side power input (102) and the secondary-side power output (116);
a first switch (106) which when closed provides power from the primary-side power input (102) to the voltage converter (104);
**characterized by**:
wherein the secondary-side power output (116) is electrically connected to a receptacle (112), the receptacle (112) providing power to a device connected to the receptacle (112) by a plug (114); and
wherein the receptacle (112) is movable from a first position to a second position in a direction parallel to the mechanical action of plugging the plug (114) into the receptacle (112) and wherein when the receptacle (112) is moved into the second position, the first switch (106) enters a closed state and provides an electrical connection between the primary side power input (102) and the voltage converter (104) such that the first switch (106) is held in the closed state by electric energy provided from the secondary-side power output (116).

2. The power supply circuit of claim 1, wherein the first switch (106) is an electromagnetic relay, and wherein the first switch is mechanically closed when the receptacle (112) is in the second position.

3. The power supply circuit of claim 1, wherein the first switch (106) is one of an electromagnetic relay, a solid state relay and an optocoupler, wherein a second switch (111) is provided in parallel to the first switch (106), wherein the second switch (111) is closed while the receptacle (112) is in the second position and provides an electrical connection between the primary side power input (102) and the voltage converter (104), and wherein the first switch is energized and enters a closed state by electric energy provided from the secondary-side power output (116).

4. The power supply circuit of claim 3, wherein the second switch (111) is one of a magnetically operated relay and a non-latching mechanical switch.

5. The power supply of claim 1, wherein one of a power sensor or a current sensor (122) is arranged between the output (116) of the power supply circuit and the receptacle (112), and wherein a control circuit (118) is provided that is configured to terminate holding the first switch (106) in the closed state when the power or the current provided to the device connected thereto falls below a threshold value.

6. The power supply circuit of claim 1, wherein the movement of the receptacle (112) is provided through one of spring-loading (113) and an elastic suspension provided between the receptacle (112) and a supporting frame or housing.

7. The power supply circuit of claim 1, wherein the voltage converter (104) is one of a linear voltage regulator, a transformer, a switch-mode AC/DC converter, a switch-mode DC/DC converter, a switch-mode DC/AC converter.

8. The power supply circuit of claim 7, wherein the voltage converter (104) provides electrical isolation between the input and the output.

9. A method for controlling the power consumption of a power supply circuit, comprising:
moving a receptacle from a first position to a second position in response a plug being plugged into the receptacle, the movement of the receptacle to the second position causing an electrical connection between a primary-side input and a voltage converter;
electrically communicating, from an output of the voltage converter, a voltage generated in response to the established electrical connection between the primary-side input and the voltage converter to hold a first switch in a closed state; and
monitoring one of the output power and the output current, and maintaining the first switch in the closed state while the output power or the output current is higher than a threshold value.

10. The method of claim 9, wherein moving the receptacle from the first position to the second position causes the first switch to be closed by mechanical coupling.

11. The method of claim 9, wherein moving the receptacle from the first position to the second position causes a second switch that is arranged in parallel to the first switch to be closed.
